# EUROPEAN PATENT SPECIFICATION

(11) **EP 4 323 603 B1**
(45) Date of publication and mention of the grant of the patent: **04.03.2026**
(21) Application number: 22787345.2
(22) Date of filing: 23.03.2022
(51) Int. Cl.: E04G 21/24, E04G 21/32, B65B 27/02, B65D 33/00, F16G 11/04, F16M 13/02, F21V 25/00, F21V 21/08

(54) **FALL ARREST SAFETY NET**
SICHERHEITSNETZ ZUR STURZSICHERUNG
FILET DE SÉCURITÉ ANTICHUTE

(30) Priority: 15.04.2021 HK 32021029371
(43) Date of publication of application: 21.02.2024
(73) Proprietor: MRM HK Limited, Hong Kong (HK)
(72) Inventor: SCHLIPPER, Robert Wesley, Hong Kong (CN); RITCHIE, Luke, Hong Kong (CN)
(74) Representative: Marks & Clerk LLP
(86) International application number: PCT/CN2022/082518
(87) International publication number: WO 2022/218116

(56) References cited:
- EP-A2- 2 256 268
- CN-U- 212 606 800
- DE-T2- 69 803 812
- DE-U1- 20 109 334
- DE-U1- 202020 100 745
- ES-A1- 2 164 519
- ES-A1- 2 258 353
- GB-A- 2 581 438
- GB-A- 2 581 438
- JP-A- 2005 119 740
- JP-A- 2008 172 858
- JP-A- H1 072 749
- US-A- 5 839 768
- US-A1- 2015 345 158
- US-A1- 2020 388 095
- US-B1- 8 414 367
- US-B2- 7 150 757
- US-B2- 9 446 883

## Description

### Technical field

The present invention relates to a safety net having an attachment device for securing to a construction element, particularly for use as a fall arrest apparatus to secure overhead fixtures individually.

### Background of the Invention

The patent publication EP2256268B1 describes a fall-arrest safety net assembly comprising a wire net bag that can hold a fixture to provide drop security for backing-up a primary attachment means. For instance, in offshore oil installations, the fixture may be an overhead light fixture that is a potential drop hazard. By inserting the fixture in the bag, components such as lenses and bulbs are captured and secured, along with the entire fixture itself. A line draws the mouth of the bag closed to enclose the fixture, and can be readily tied around adjacent structural members, thereby restraining the contents of the bag that might otherwise pose a safety risk to people below. The performance of this old safety net assembly is satisfactory, but there is an ongoing need for improvements in performance and manufacturing cost-effectiveness. It is an object of the present invention to address this need or, more generally, to provide an improved safety net.

US 9,446,883 discloses fall arrest safety net. According to the abstract of this document, a wire mesh safety net for enclosing an overhead device fabricated from a wire strand formed into a bag and having a closed bottom and an open mouth with a line engaging the open mouth for opening and closing the bag around the device and having wire mesh extending and retracting structure for increasing and decreasing the extent of the wire mesh bag.

GB 2,581,438 discloses a safety tether for a hand-held article. According to the abstract of this document, the tether comprises a bag made from wire mesh with a plurality of node joints (preferably crimped), wherein the bag has an opening for receiving an item and wherein a drawstring is threaded through loops of the bag. A spring toggle is located on the drawstring and is movable such as to open and close the bag. A leash (or tether) is secured to one end of the drawstring. Preferably, the leash is elastic, comprising an elastic strap core and a pleated fabric sleeve. The leash may comprise a coil. The drawstring may be attached to the wire bag via a fastener. Preferably, the wire mesh is folded such as to form eyelets for drawstring to thread through.

US 2020/388095 discloses a package locking apparatus and a system therefor.

According to the abstract of this document a parcel securement apparatus and system including a security net in which the parcel is securely retained during use. The net is secured in an unopened state by a security device including a GSM module, a Bluetooth module, and an RFID module designed to receive access requests from an NFC smartcard/mobile application/web application. A smartcard is configured to send a signal to the device to allow the net to be opened. Data from the device is transmitted to an internet portal to provide access to data concerning the securement of parcel during its transit.

US 7,150,757 discloses adjustable line locks and methods. According to the abstract of this document a line lock includes a body at least partially bounding a primary passageway, a secondary passageway, and a working passageway. In one embodiment at least a portion of the working passageway is disposed between the primary passageway and the secondary passageway such that a geometric line segment extending between the primary passageway and the secondary passageway intersects with working passageway. A line extends through the primary passageway, the secondary passageway and then through the working passageway such that a relative compression section of the line is formed between the primary passageway and the secondary passageway. The compression section of the line selectively biases against a portion of the line extending out of the working passageway so as to selectively lock the line to the body when the line is tensioned against the body.

### Disclosure of the Invention

According to one aspect of the present invention there is provided a safety net assembly according to claim 1 comprising: a bag constructed of wire net, the bag having a mouth and a plurality of net apertures spaced peripherally about the mouth;
a line having opposing first and second ends, first and second line portions of the line being disposed adjacent the first and second ends respectively, an intermediate line portion of the line located between the first and second line portions;
a running coupler on the first end through which the first line portion extends, with the first line portion passing in a loop through the net apertures to form a noose for drawing the mouth closed;
a choker plate having opposing sides and a plurality of openings that extend between the opposing sides, wherein the intermediate line portion loops through the openings in the choker plate to secure the choker plate to the line outside the noose, and
a fastener fixed to the second end.

The line may be continuous, or it may alternatively be interrupted by fasteners, links, or the like, connected to adjacent ends of the line and which can be separated, for instance so that the noose loop may be broken as needed in some installations of the safety net assembly.

According to the invention each opening in the choker plate is formed in a locally-thickened section and each opening has an arcuate inner surface of a waisted form that tapers to diverge from a central section of the opening toward both sides. By avoiding sharp internal edges in the opening in this way, the shock-loading capacity of the assembly is increased.

Preferably outermost rims of each opening lie in substantially parallel planes and the arcuate inner surface is curved to join both planes substantially tangentially. Preferably the choker plate is forged and the locally-thickened section comprises a projection on both of the sides.

Preferably the openings include three openings through which the line passes sequentially so that a loop in the line protrudes from each of the faces of the choker plate.

Preferably an RFID tag is fixed to the choker plate. Preferably the RFID tag is fixed to an envelope in which at least part of the choker plate is received. Preferably the envelope comprises holes disposed in registration with the openings.

Preferably the running coupler comprises the first end of the line turned back on itself, and fastened to the line to form a terminal eye.

Preferably the bag is formed from a net panel comprising a plurality of wire lengths that extend alongside one another, each length connected to an adjacent one of the lengths by longitudinally arrayed fixings, wherein the lengths comprise edge lengths extending along edges of the panel that are opposing and internal lengths disposed between the edge lengths, and the fixings alternately connect each internal length to adjacent ones of the lengths, a fold in the net panel turns the lengths back on themselves and forms a closed end opposite the mouth, and wherein sections of at least one edge length are directly connected together by the fixings.

Preferably the fold is transverse to the wire lengths and longitudinal ends of the panel, are brought together to form the mouth.

Preferably ends of the wire lengths are joined by two of the fixings.

Preferably a run is defined between adjacent fixings along each length, such that runs of the internal lengths define internal runs, and runs of the edge lengths define edge runs, and wherein the internal runs all have substantially the same length.

Optionally, the edge runs all have substantially the same length, and the internal runs are shorter than the edge runs.

In another aspect, the invention provides a bag formed from a net panel comprising a plurality of wire lengths that extend alongside one another with each length connected to an adjacent one of the lengths by longitudinally arrayed fixings, wherein the lengths comprise edge lengths extending along edges of the panel that are opposing and internal lengths disposed between the edge lengths, where the fixings alternately connect each internal length to adjacent ones of the lengths, a fold in the net panel turns the lengths back on themselves and forms a closed end of the bag opposite a mouth, whereby a plurality of net apertures are spaced peripherally about the mouth, and wherein sections of at least one edge length are directly connected together by the fixings.

Preferably the fold is transverse to the wire lengths and longitudinal ends of the panel, are brought together to form the mouth.

Preferably ends of the wire lengths are joined by two of the fixings.

Preferably a run is defined between adjacent fixings along each length, such that runs of the internal lengths define internal runs, and runs of the edge lengths define edge runs, and wherein the internal runs all have substantially the same lengthwise dimension.

Optionally, the edge runs all have substantially the same lengthwise dimension, and the internal runs are shorter than the edge runs.

The fixings are preferably ferrules crimped to the lengths, but suitable alternative fixings may include other alternative clips, welded or soldered joints etc.

Preferably the wire lengths comprise metal strands twisted together. Preferably there are no areas of plastic deformation in the wire lengths, and so the inherent elasticity of the wire lengths provides a resilient bag that tends to collapse to a compact closed state.

In yet a further aspect, the invention provides a method according to claim 13 of securing apparatus mounted at height upon a construction member, the method comprising:
providing a fall arrest safety net assembly substantially as described above;
introducing the apparatus through the mouth so as to at least partially enclose the apparatus in the wire net bag;
manipulating the choker plate and the line to draw the mouth closed;
looping the second line portion about the construction member, and
connecting the first line portion and the second end by means of a fastener.

This invention provides a safety net assembly which is effective and efficient in operational use and, in particular, provides improvements in load ratings and manufacturing cost-effectiveness.

### Brief Description of the Drawings

Preferred forms of the present invention will now be described by way of example with reference to the accompanying drawings, wherein:
Fig. 1 is fragmentary pictorial view of an embodiment of the fall arrest safety net assembly of the invention in a collapsed state ready to receive a fixture;
Fig. 2 is a pictorial view of a fixture secured within the fall arrest safety net assembly of Fig. 1;
Fig. 3 is a plan view of a panel that forms the net bag of the fall arrest safety net assembly of Fig. 1;
Fig. 4 is a pictorial view of a fixture received in the bag (alone);
Fig. 5 shows the line assembly of the fall arrest safety net assembly of Fig. 1;
Fig. 6 is a section in a transverse plane through the choker plate of the fall arrest safety net, and
Fig. 7 is pictorial view of an RFID attachment for the choker plate.

### Detailed Description

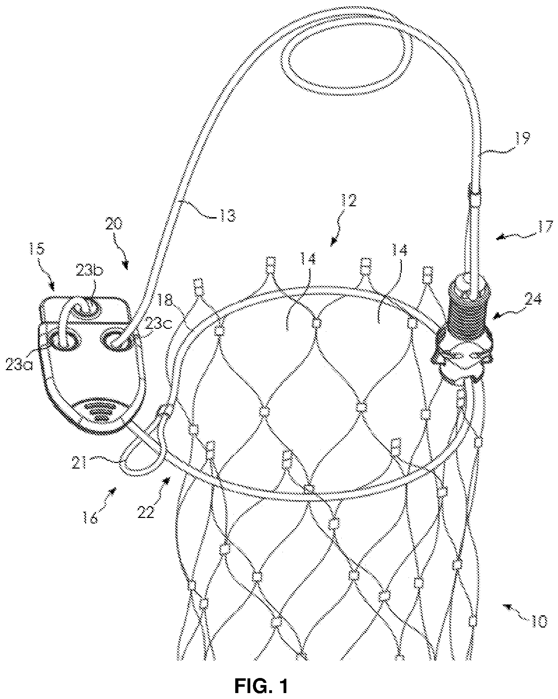

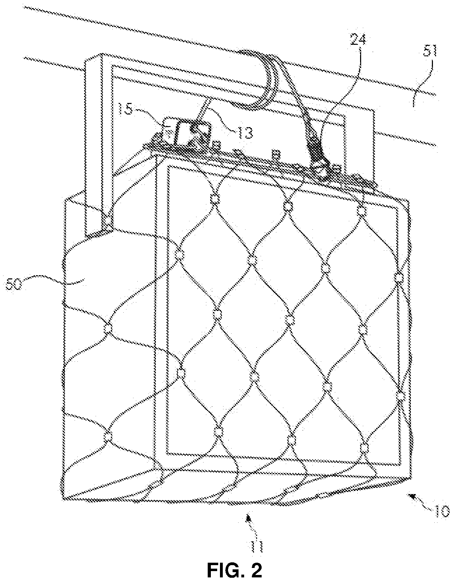

Referring to Fig. 1 and 2 of the drawings, an embodiment of a safety net assembly according to the invention includes a bag 10 constructed of wire net and having a closed end 11. Opposite the closed end 11 a mouth 12 is provided for receiving a fixture to be secured, such as a light fixture 50 mounted overhead on a member such as a beam 51. Apertures 14 of the net are spaced peripherally about the mouth 12.

A line 13 is used both to draw the mouth 12 closed and secure the bag 10 and enclosed fixture 50. The line 13 has first end 16 and opposing second end 17, first and second line portions 18, 19 of the line 13 being disposed adjacent the first end 16 and second end 17 respectively, and an intermediate line portion 20 of the line located between the first and second line portions 18 and 19. A running coupler 21 may be provided in the form of an eye on the first end 16 through which the first line portion 18 extends, with the first line portion 18 passing in a loop through the apertures 14 to form a noose 22 for drawing the mouth 12 closed.

A choker plate 15 includes a plurality of openings 23a, 23b, 23c through which the intermediate line portion 20 passes in turn and in this way the choker plate 15 is secured to the line outside the noose 22 and serves to fix the size of the noose 22 and thus the opening dimension of the mouth 12.

The second end 17 of the line 13 may be fixed by an eye to a fastener 24 that serves to releasably fasten the second end 17 to the line 13, for instance, to fasten back to the line 13. Advantageously, the fastener 24 is a gated fastener that, for security, requires multiple independent actions to be performed by the user to open a gate (not shown) and is of the auto-locking type (like a carabiner) whereby, after the line has been entered past the gate, release of the fastener by the user automatically closes the gate. The arrangement illustrated in Figs 1 and 2, in which the line 13 goes about the beam 51 and the fastener 24 is connected to the first line portion 18 is particularly preferred as the bag 10 can become suspended by two lengths of the line (those lengths extending either side of the beam 51).

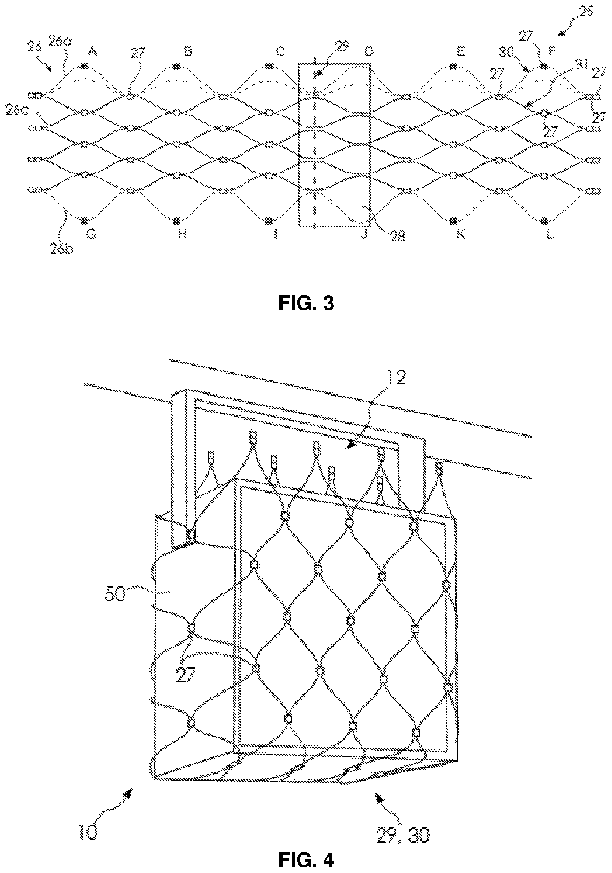

The bag 10 is formed from a net panel 25 shown in plan view in Fig. 3 and comprising a plurality of wire lengths, referred to collectively as lengths 26, that extend alongside one another, with each length 26 connected to an adjacent one of the lengths 26 by longitudinally arrayed fixings 27 that define the nodes of the net. To better show the wave-like path of the lengths in Fig. 3 next to one another, the fixings 27 within the part of the panel 25 bounded by the rectangle 28 have been removed. The lengths 26 comprise edge lengths 26a, 26b extending along opposing edges of the panel 25. Disposed between the edge lengths 26a, 26b are internal lengths 26c. In the longitudinal direction, the fixings 27 alternately connect each internal length 26c to adjacent ones of the lengths 26. A transverse fold 29 in the net panel 25 turns the lengths 26 back on themselves, with longitudinal ends of the panel 25 being brought together to form the mouth 12. In this way, the fold 29 forms a closed end 30 of the bag 10 disposed opposite the mouth 12. After forming the fold 29, sections of at least one edge length 26a, 26b are directly connected together by the fixings 27 to form the bag 10.

In the illustrated embodiment, both longitudinal edges of the panel 25 may be connected along their lengths to form the bag. However, this is not essential to the invention, and it may be advantageous for some applications that, for instance, an entire longitudinal edge, or part of one longitudinal edge extending from the mouth 12, may not be connected back to itself, thereby allowing the bag 10 to be opened up to a greater extent and to receive a member such as a power cable.

Connecting halves of the longitudinal edges of the panel 25 together to form the bag may be achieved by connecting points in a pairwise manner as shown in Fig. 3. For instance, the pair of points C and D are connected by a fixing 27, as are the pairs of points B and E, A and F, and along the opposite edge, the pairs of points I and J, H and K, and G and L. Also, the ends of the wire lengths 26 are joined by two fixings 27, reinforcing these connections which may see higher loads in use owing to their engagement with the line 13.

Figures 3 and 4 also show a preferred feature of the bag 10, whereby the internal lengths 26c have the same lengthwise extent and form a first regular mesh section, while the edge lengths 26a and 26b are longer than the internal lengths 26c, and thus form second and third regular mesh sections on opposite sides of the bag 10 with a larger mesh size. The dashed line adjacent the edge length 26a illustrates the length difference compared to the adjacent internal length 26c and, more particularly, this difference may be described with regard to a run defined between adjacent fixings 27 along each length 26. As shown, runs of the edge lengths 26a, 26b define edge runs 30 between adjacent fixings 27, while runs of the internal lengths 26c define internal runs 31. The internal runs 31 may all have substantially the same length, and the edge runs 30 also all have substantially the same length, the internal runs 31 being shorter than the edge runs 30. This construction has been found to be particularly advantageous in addressing a number of different issues. For instance, when enclosing a fixture 50 of a generally rectangular prismatic form as shown, varying the relative dimension of the edge runs 30 provides a flexibility to the manufacturing process that allows a closer to optimum net form to be achieved over a range of different fixtures and corresponding bag sizes.

A further advantage of this bag 10 is its adaptation to automated manufacturing. By orienting the lengths of each panel in the long direction, panels, optionally of different lengths, can be produced continuously. Compared to bags made by previous methods, particularly the peg-board method, whereby each panel is made by arraying a single wire length back and forth around pegs to define the desired shape before applying the fixings, substantial productivity increases are achieved.

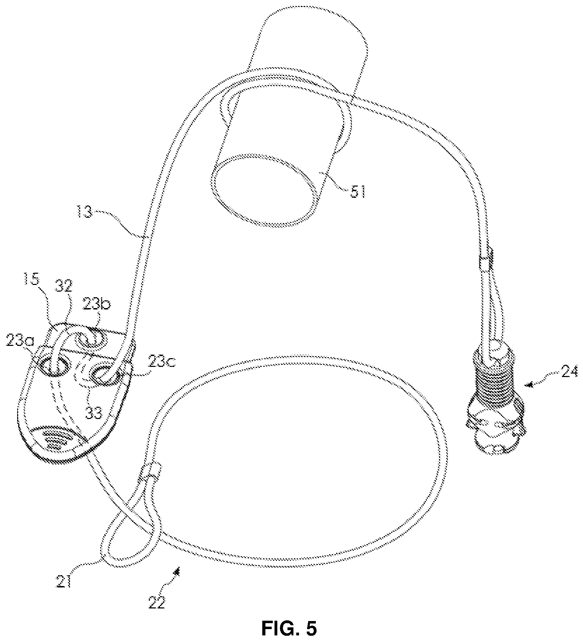

In Fig. 5, the bag 10 has been removed to plainly show the noose 22 that serves to close the mouth of the bag and the path of the line 13, including through the choker plate 15. The line 13 passes between the openings 23a and 23b forming a loop 32 on one side of the choker plate 15 then a loop 33 on the opposite side between the openings 23b and 23c. When these loops 32, 33 are made small, the choker is essentially fixed to the line 13, and the running coupler 21 cannot pass the choker plate 15. The fastener 24 is shown spaced apart from the noose 22 in Fig. 5, as before the fastener 24 is attached to the noose 22.

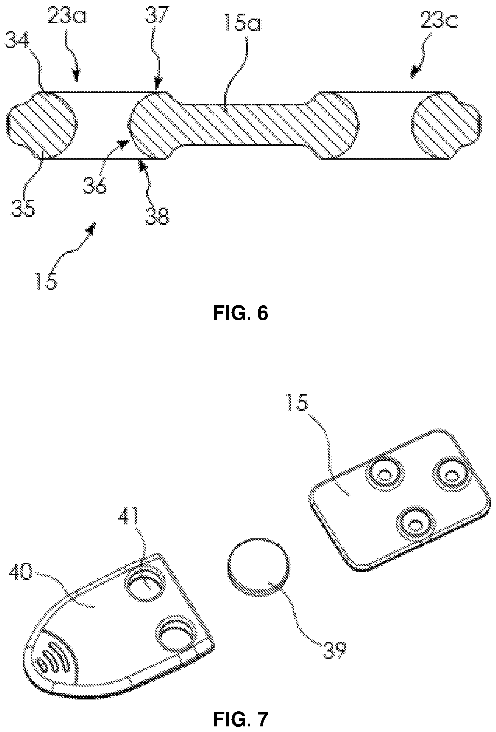

The choker plate 15 may be forged from a substantially rectangular stainless steel plate to provide a locally-thickened section around each of the openings 23a, 23b, 23c. The section of Fig. 6 shows the form of the openings 23a, 23b, 23c in the choker plate 15 which are all alike, each formed by annular projections 34, 35 that extend from either side of the plate body 15a to providing the local-thickening. Each opening 23a, 23b, 23c has an arcuate inner surface 36 of a waisted form that tapers to diverge from a central section of the opening toward both sides. Outermost rims 37, 38 of each opening may lie in substantially parallel planes (not shown) with the arcuate inner surface 36 curved to join both planes substantially tangentially.

Furthermore, an RFID tag 39 may be fixed to the choker plate 15, allowing identification of the safety net assembly, for logistics purposes and to facilitate asset management and on-site inspection. The RFID tag 39 may be held in a polymer envelope 40 in which the choker plate 15 is at least partially received. As shown, the envelope 40 may include a through-hole 41 passing through opposite walls of the envelope 40 and positioned for registration with the annular projections 34, 35 to secure the envelope 40 to the choker plate 15.

Each of the lengths 26 is may be made of wire strands, particularly twisted stainless steel wire strands and may be continuous or discontinuous (for instance, including end-to-end joints). The result is a bag 10 with a degree of flexibility and resilience, allowing it to be expanded in a direction transverse to the lay of the wire so as to accommodate fixtures of varying size, while naturally tending to collapse against the sides of the fixture. The fixings 27 may be ferrules crimped onto the lengths.

In use, the components of the fixture 50 are first introduced through the mouth 12 thereby substantially enclosing the fixture in the bag 1. By then manipulating the choker plate 15 to draw the line 13 through the openings 23a, 23b, 23c the noose 22 is reduced in size to close the mouth 12. The second portion 19 of the line 13 is then looped about the member 51. The fastener 24 is then connected to the noose 22 to secure the assembly. Compared to the old safety net assembly in which the first end of the line was fixed to the choker plate, so that the choker fixed the circumference of the loop, the invention, owing to the running coupler 21 and noose 22, allows for the circumference of the noose loop to be reduced by tension in the line 13, as occurs in a drop. Under the shock loading caused by dropping a secured fixture 50, even a small amount of reduction in noose circumference that is taken up as the line 13 is tensioned, reduces the impact load factor. Likewise, the absence of sharp internal edges in the line-receiving openings of the choker plate 15 increases the breaking load of the line 13. Together, these factors allowing a higher load rating to be achieved.

Aspects of the present invention have been described by way of example only and it should be appreciated that modifications and additions may be made thereto without departing from the scope thereof.

## Claims

1. A safety net assembly comprising: a bag (10) constructed of wire net, the bag (10) having a mouth (12) and a plurality of net apertures (14) spaced peripherally about the mouth (12);
a line (13) having opposing first and second ends (16, 17), first and second line portions (18, 19) of the line (13) being disposed adjacent the first and second ends (16, 17) respectively, an intermediate line portion (20) of the line (13) located between the first and second line portions (18, 19),
**characterized in that**, the safety net assembly further comprises:
a running coupler (21) on the first end (16) through which the first line portion (18) extends, with the first line portion (18) passing in a loop through the net apertures (14) to form a noose (22) for drawing the mouth (12) closed;
a choker plate (15) having opposing sides and a plurality of openings (23a, 23b, 23c) that extend between the opposing sides, wherein the intermediate line portion (20) loops through the openings (23a, 23b, 23c) in the choker plate (15) to secure the choker plate (15) to the line (13) outside the noose (22), and
a fastener (24) fixed to the second end,
wherein each of the openings (23a, 23b, 23c) in the choker plate (15) is formed in a locally-thickened section and each opening (23a, 23b, 23c) has an arcuate inner surface (36) of a waisted form that tapers to diverge from a central section of the opening (23a, 23b, 23c) toward both sides.

2. The safety net assembly of claim 1 wherein outermost rims (37, 38) of each opening (23a, 23b, 23c) lie in substantially parallel planes and the arcuate inner surface (36) is curved to join both planes substantially tangentially.

3. The safety net assembly of claim 1 wherein the locally-thickened section comprises a projection (34, 35) on both of the sides.

4. The safety net assembly of any one of claims 1 to 3, wherein the openings (23a, 23b, 23c) include three openings through which the line (13) passes sequentially so that a loop in the line (13) protrudes from each of the faces of the choker plate (15).

5. The safety net assembly of any one of claims 1 to 4, wherein an RFID tag (39) is fixed to the choker plate (15).

6. The safety net assembly of claim 5 wherein the RFID tag (39) is fixed to an envelope (40) in which at least part of the choker plate (15) is received.

7. The safety net assembly of claim 6 wherein the envelope (15) comprises holes disposed in registration with the openings.

8. The safety net assembly of any one of the preceding claims, wherein the running coupler (21) comprises the first end (16) of the line (13) turned back on itself, and fastened to the line 913) to form a terminal eye.

9. The safety net assembly of any one of the preceding claims, wherein the bag (10) is formed from a net panel (25) comprising a plurality of wire lengths that extend alongside one another, each length connected to an adjacent one of the lengths by longitudinally arrayed fixings (27), wherein the lengths comprise edge lengths (26a, 26b) extending along edges of the panel (25) that are opposing and internal lengths (26c) disposed between the edge lengths, and the fixings (27) alternately connect each internal length (26c) to adjacent ones of the lengths, a fold (29) in the net panel (25) turns the lengths back on themselves and forms a closed end (30) opposite the mouth (12), and wherein sections of at least one edge length (26a, 26b) are directly connected together by the fixings (27).

10. The safety net assembly of claim 6 wherein the fold (29) is transverse to the wire lengths and longitudinal ends of the panel (25), are brought together to form the mouth (12).

11. The safety net assembly of any one of the preceding claims, wherein ends of the wire lengths are joined by two of the fixings (27).

12. The safety net assembly of any one of the preceding claims, wherein a run is defined between adjacent fixings (27) along each length, such that runs of the internal lengths (26c) define internal runs (31), and runs of the edge lengths (26a, 26b) define edge runs (30), and wherein the internal runs (31) all have substantially a first length, the edge runs (30) all have substantially a second length, and the first length is shorter than the second length.

13. A method of securing apparatus mounted at height upon a construction member, the method comprising:
providing a fall arrest safety net assembly substantially as claimed in any one of claims 1 to 8;
introducing the apparatus through the mouth (12) so as to at least partially enclose the apparatus in the wire net bag (10);
manipulating the choker plate (15) and the line (13) to draw the mouth (12) closed;
looping the second line portion (19) about the construction member, and
connecting the first line portion (18) and the second end (17) by means of a fastener (24).

## Patentansprüche

1. Sicherheitsnetzanordnung, die Folgendes umfasst: einen Beutel (10), der aus Drahtnetz aufgebaut ist, wobei der Beutel (10) eine Mundöffnung (12) und eine Vielzahl von Netzmaschenöffnungen (14) aufweist, die umfänglich um die Mundöffnung (12) beabstandet sind;
eine Leine (13), die ein erstes und ein zweites Ende (16, 17), die einander entgegengesetzt sind, aufweist, wobei der erste und der zweite Leinenabschnitt (18, 19) der Leine (13) an das erste bzw. das zweite Ende (16, 17) angrenzend angeordnet sind, wobei sich ein Zwischenleinenabschnitt (20) der Leine (13) zwischen dem ersten und dem zweiten Leinenabschnitt (18, 19) befindet,
**dadurch gekennzeichnet, dass** die Sicherheitsnetzanordnung weiter Folgendes umfasst:
einen Laufkoppler (21) an dem ersten Ende (16), durch den sich der erste Leinenabschnitt (18) erstreckt, wobei der erste Leinenabschnitt (18) in einer Schleife durch die Netzmaschenöffnungen (14) verläuft, um eine Schlaufe (22) zum Schließen der Mundöffnung (12) durch Zusammenziehen zu bilden;
eine Drosselplatte (15), die entgegengesetzte Seiten und eine Vielzahl von Öffnungen (23a, 23b, 23c) aufweist, die sich zwischen den entgegengesetzten Seiten erstrecken, wobei der Zwischenleinenabschnitt (20) durch die Öffnungen (23a, 23b, 23c) in der Drosselplatte (15) verschleift wird, um die Drosselplatte (15) an der Leine (13) außerhalb der Schlaufe (22) zu sichern, und
ein Befestigungselement (24), das an dem zweiten Ende befestigt ist,
wobei jede der Öffnungen (23a, 23b, 23c) in der Drosselplatte (15) in einem lokal verdickten Teilabschnitt gebildet ist und jede Öffnung (23a, 23b, 23c) eine bogenförmige Innenfläche (36) mit taillierter Form aufweist, die sich verjüngt, um von einem Mittelteilabschnitt der Öffnung (23a, 23b, 23c) in Richtung beider Seiten hin auseinander zu gehen.

2. Sicherheitsnetzanordnung nach Anspruch 1, wobei die äußersten Ränder (37, 38) jeder Öffnung (23a, 23b, 23c) in im Wesentlichen parallelen Ebenen liegen und die bogenförmige Innenfläche (36) gekrümmt ist, um beide Ebenen im Wesentlichen tangenzial zu verbinden.

3. Sicherheitsnetzanordnung nach Anspruch 1, wobei der lokal verdickte Teilabschnitt auf beiden Seiten einen Vorsprung (34, 35) umfasst.

4. Sicherheitsnetzanordnung nach einem der Ansprüche 1 bis 3, wobei die Öffnungen (23a, 23b, 23c) drei Öffnungen einschließen, durch die die Leine (13) nacheinander durchgeht, sodass eine Schleife in der Leine (13) von jeder der Flächen der Drosselplatte (15) vorragt.

5. Sicherheitsnetzanordnung nach einem der Ansprüche 1 bis 4, wobei ein RFID-Tag (39) an der Drosselplatte (15) befestigt ist.

6. Sicherheitsnetzanordnung nach Anspruch 5, wobei das RFID-Tag (39) an einer Hülle (40) befestigt ist, in dem mindestens ein Teil der Drosselplatte (15) aufgenommen ist.

7. Sicherheitsnetzanordnung nach Anspruch 6, wobei die Hülle (15) Löcher umfasst, die mit den Öffnungen übereinstimmen.

8. Sicherheitsnetzanordnung nach einem der vorstehenden Ansprüche, wobei der Laufkoppler (21) das erste Ende (16) der Leine (13) umfasst, das auf sich selbst zurückgebogen und an der Leine (13) befestigt ist, um eine Endöse zu bilden.

9. Sicherheitsnetzanordnung nach einem der vorstehenden Ansprüche, wobei der Beutel (10) aus einem Netzpaneel (25) gebildet ist, das eine Vielzahl von sich parallel erstreckenden Drahtlängen umfasst, wobei jede Länge an einer angrenzenden der Längen durch längs gereihte Befestigungen (27) verbunden ist, wobei die Längen Randlängen (26a, 26b) umfassen, die sich entlang von Rändern des Paneels (25) erstrecken, die einander entgegengesetzt sind, und Innenlängen (26c), die zwischen den Randlängen angeordnet sind, und wobei die Befestigungen (27) abwechselnd jede Innenlänge (26c) mit angrenzenden Längen verbinden, eine Falte (29) in dem Netzpaneel (25) die Längen auf sie selbst zurückfaltet und ein geschlossenes Ende (30) der Mundöffnung (12) entgegengesetzt bildet, und wobei Teilabschnitte mindestens einer Randlänge (26a, 26b) durch die Befestigungen (27) direkt miteinander verbunden sind.

10. Sicherheitsnetzanordnung nach Anspruch 6, wobei die Falte (29) quer zu den Drahtlängen verläuft und die Längsenden des Paneels (25) zusammengeführt werden, um die Mundöffnung (12) zu bilden.

11. Sicherheitsnetzanordnung nach einem der vorstehenden Ansprüche, wobei die Enden der Drahtlängen durch zwei der Befestigungen (27) verbunden sind.

12. Sicherheitsnetzanordnung nach einem der vorstehenden Ansprüche, wobei zwischen angrenzenden Befestigungen (27) entlang jeder Länge ein Lauf derart definiert ist, dass Läufe der inneren Längen (26c) innere Läufe (31) definieren, und Läufe der Randlängen (26a, 26b) Randläufe (30) definieren, und wobei die inneren Läufe (31) alle im Wesentlichen eine erste Länge aufweisen, die Randläufe (30) alle im Wesentlichen eine zweite Länge aufweisen, und die erste Länge kürzer als die zweite Länge ist.

13. Verfahren zum Sichern einer Einrichtung, die in der Höhe an einem Bauelement montierten ist, wobei das Verfahren Folgendes umfasst:
Bereitstellen einer Absturzsicherungsnetzanordnung im Wesentlichen nach einem der Ansprüche 1 bis 8;
Einführen der Einrichtung durch die Mundöffnung (12), sodass die Einrichtung mindestens teilweise in dem Drahtnetzbeutel (10) eingeschlossen wird;
Manipulieren der Drosselplatte (15) und der Leine (13), um die Mundöffnung (12) zum Schließen zusammenzuziehen;
Verschleifen des zweiten Leinenabschnitts (19) um das Bauelement, und
Verbinden des ersten Leinenabschnitts (18) und des zweiten Endes (17) mittels eines Befestigungselements (24).

## Revendications

1. Ensemble filet de sécurité comprenant : un sac (10) construit en filet métallique, le sac (10) présentant une bouche (12) et une pluralité d'ouvertures de filet (14) espacées périphériquement autour de la bouche (12) ;
une ligne (13) présentant des première et seconde extrémités opposées (16, 17), des première et seconde parties de ligne (18, 19) de la ligne (13) étant respectivement disposées adjacentes aux première et seconde extrémités (16, 17), une partie de ligne intermédiaire (20) de la ligne (13) étant située entre les première et seconde parties de ligne (18, 19),
**caractérisé en ce que** l'ensemble filet de sécurité comprend en outre :
un coupleur de course (21) sur la première extrémité (16) à travers lequel s'étend la première partie de ligne (18), la première partie de ligne (18) passant en boucle à travers les ouvertures de filet (14) pour former un nœud coulant (22) pour fermer la bouche (12) ;
une plaque d'étranglement (15) présentant des côtés opposés et une pluralité d'orifices (23a, 23b, 23c) s'étendant entre les côtés opposés, dans lequel la partie de ligne intermédiaire (20) passe en boucle à travers les orifices (23a, 23b, 23c) de la plaque d'étranglement (15) pour sécuriser la plaque d'étranglement (15) à la ligne (13) à l'extérieur du nœud coulant (22), et
une fixation (24) fixée à la seconde extrémité,
dans lequel chacun des orifices (23a, 23b, 23c) de la plaque d'étranglement (15) est formé dans une section localement épaissie et chaque ouverture (23a, 23b, 23c) présente une surface intérieure arquée (36) de forme cintrée qui s'effile pour diverger d'une section centrale de l'ouverture (23a, 23b, 23c) vers les deux côtés.

2. Ensemble filet de sécurité selon la revendication 1, dans lequel les bords extérieurs (37, 38) de chaque ouverture (23a, 23b, 23c) se trouvent dans des plans sensiblement parallèles et la surface intérieure arquée (36) est incurvée pour joindre les deux plans sensiblement tangentiellement.

3. Ensemble filet de sécurité selon la revendication 1 dans lequel la section localement épaissie comprend une saillie (34, 35) des deux côtés.

4. Ensemble filet de sécurité selon l'une quelconque des revendications 1 à 3, dans lequel les orifices (23a, 23b, 23c) incluent trois orifices à travers lesquels la ligne (13) passe séquentiellement de sorte qu'une boucle dans la ligne (13) fasse saillie de chacune des faces de la plaque d'étranglement (15).

5. Ensemble filet de sécurité selon l'une quelconque des revendications 1 à 4, dans lequel une étiquette RFID (39) est fixée à la plaque d'étranglement (15).

6. Ensemble filet de sécurité selon la revendication 5, dans lequel l'étiquette RFID (39) est fixée à une enveloppe (40) dans laquelle au moins une partie de la plaque d'étranglement (15) est reçue.

7. Ensemble filet de sécurité selon la revendication 6, dans lequel l'enveloppe (15) comprend des trous disposés en alignement avec les ouvertures.

8. Ensemble filet de sécurité selon l'une quelconque des revendications précédentes, dans lequel le coupleur de course (21) comprend la première extrémité (16) de la ligne (13) retournée sur elle-même et fixée à la ligne (13) pour former un œil terminal.

9. Ensemble filet de sécurité selon l'une quelconque des revendications précédentes, dans lequel le sac (10) est formé d'un panneau de filet (25) comprenant une pluralité de longueurs de fil qui s'étendent côte à côte, chaque longueur étant reliée à une longueur adjacente par des fixations en réseau longitudinalement (27), dans lequel les longueurs comprennent des longueurs de bord (26a, 26b) s'étendant le long de bords opposés du panneau (25) et des longueurs internes (26c) disposées entre les longueurs de bord, et les fixations (27) relient alternativement chaque longueur interne (26c) aux longueurs adjacentes, un pli (29) dans le panneau de filet (25) replie les longueurs sur elles-mêmes et forme une extrémité fermée (30) opposée à la bouche (12), et dans lequel des sections d'au moins une longueur de bord (26a, 26b) sont directement reliées entre elles par les fixations (27).

10. Ensemble filet de sécurité selon la revendication 6, dans lequel le pli (29) est transversal aux longueurs de fil et les extrémités longitudinales du panneau (25) sont rassemblées pour former la bouche (12).

11. Ensemble filet de sécurité selon l'une quelconque des revendications précédentes, dans lequel les extrémités des longueurs de fil sont jointes par deux des fixations (27).

12. Ensemble filet de sécurité selon l'une quelconque des revendications précédentes, dans lequel une course est définie entre des fixations adjacentes (27) le long de chaque longueur, de sorte que des courses des longueurs internes (26c) définissent des courses internes (31), et des courses des longueurs de bord (26a, 26b) définissent des courses de bord (30), et dans lequel les courses internes (31) ont toutes sensiblement une première longueur, les courses de bord (30) ont toutes sensiblement une seconde longueur, et la première longueur est plus courte que la seconde longueur.

13. Procédé de sécurisation d'un appareil monté en hauteur sur un élément de construction, le procédé comprenant :
la fourniture d'un ensemble filet de sécurité antichute sensiblement conforme à l'une quelconque des revendications 1 à 8 ;
l'introduction de l'appareil à travers la bouche (12) de manière à au moins partiellement l'enfermer dans le sac de filet métallique (10) ;
la manipulation de la plaque d'étranglement (15) et de la ligne (13) pour fermer la bouche (12) ;
le bouclage de la seconde partie de ligne (19) autour de l'élément de construction, et
la liaison de la première partie de ligne (18) et de la seconde extrémité (17) au moyen d'une fixation (24).
